# EUROPÄISCHE PATENTANMELDUNG

(11) **EP 4 717 551 A1**
(43) Veröffentlichungstag der Anmeldung: **01.04.2026**
(21) Anmeldenummer: 24203516.0
(22) Anmeldetag: 30.09.2024
(51) Int. Cl.: B61L 23/04, B61L 27/30, B61L 27/50, B61L 27/53, B61L 29/30

(54) **VERFAHREN ZUM ÜBERWACHEN EINES GLEISABSCHNITTS**

(71) Anmelder: Siemens Mobility GmbH, 80997 München (DE)
(72) Erfinder: Braband, Jens, 38106 Braunschweig (DE)
(74) Vertreter: Siemens Patent Attorneys

(57) **Zusammenfassung**

Die Erfindung umfasst ein Verfahren zum Überwachen eines Gleisabschnitts (STA) auf Hindernisse, bei dem zum Überwachen der Gleisabschnitt (STA) von mindestens einem ersten bildgebenden Sensor und mindestens einem zweiten bildgebenden Sensor erfasst wird. Der mindestens eine erste Sensor (SN11, SN12, SN13, SN14) und der mindestens eine zweite Sensor (SN2) sind derart auf den Gleisabschnitt (STA) ausgerichtet, dass jeder Ort des Gleisabschnitts (STA) in je einem ersten Bild (B1) des mindestens einen ersten Sensors (SN11, SN12, SN13, SN14) und je einem zweiten Bild (B12) des mindestens einen zweiten Sensors (SN2) vorhanden ist. Die ersten Bilder (B1) und zweiten Bilder (B12) werden rechnergestützt auf Hindernisse im Gleisabschnitt (STA) hin analysiert. Ein auf das Vorhandensein eines Hindernisses hinweisendes Signal wird immer erzeugt, wenn ein Hindernis durch das Analysieren sowohl in dem mindestens einen der ersten Bilder (B1) als auch in dem mindestens einem der zweiten Bilder (B12) erkannt wurde. Ein auf das Vorhandensein eines Hindernisses hinweisendes Signal, wenn das Hindernis durch das Analysieren nur in dem mindestens einem der ersten Bilder (B1) oder nur in dem mindestens einem der zweiten Bilder (B12) erkannt wurde, wird nur dann erzeugt, wenn das erkannte Hindernis durch das Analysieren als Hindernis einer vorgegebenen kritischen Kategorie erkannt wurde, und wird nicht erzeugt, wenn das erkannte Hindernis durch das Analysieren als Hindernis einer vorgegebenen unkritischen Kategorie erkannt wurde. Ein auf einen Fehler hinweisendes erstes Signal wird immer erzeugt, wenn das Hindernis durch das Analysieren nur in dem mindestens einem der ersten Bilder (B1) oder nur in dem mindestens einem der zweiten Bilder (B12) erkannt wurde. Ferner umfasst die Erfindung eine Bahnanlage, ein Computerprogrammprodukt sowie ein computerlesbares Speichermedium.

## Beschreibung

### Technisches Gebiet

Von der Erfindung ist ein Verfahren zum Überwachen eines Gleisabschnitts umfasst. Ferner ist von der Erfindung Bahnanlage mit einem Gleisabschnitt, umfasst. Ferner ist von der Erfindung Computerprogrammprodukt, enthaltend Programmbefehle, umfasst. Ferner ist von der Erfindung Computerlesbares Speichermedium, enthaltend Daten, umfasst.

### Technischer Hintergrund

Gemäß dem Stand der Technik ist es bekannt, Bahnsteige mithilfe von Kameras an den Bahnsteigen oder auf dem Zug zu überwachen. Die Kamerabilder werden beispielsweise durch das Betriebspersonal eines Bahnbetreibers überwacht, sodass der Zugverkehr unterbrochen werden kann, wenn sich auf dem Gleisabschnitt, welcher sich entlang des Bahnsteigs erstreckt, ein Hindernis entdeckt wird. Als Hindernisse werden Objekte oder Lebewesen verstanden, deren Größe zu einer Kollision mit einem einfahrenden Zug führen würden. Hierbei handelt es sich um Fremdkörper auf dem betreffenden Gleisabschnitt, die vorzugsweise ausgehend vom Bahnsteig auf den Gleisabschnitt gelangen können. Eine ähnliche Situation ergibt sich auch in den Gefahrenräumen von Bahnübergängen.

Aus dem erläuterten Stand der Technik ergibt sich das Problem, dass die manuelle Überwachung von von Gleisabschnitten insbesondere an Bahnsteigen und Bahnübergängen personalaufwendig und damit kostenintensiv ist. Außerdem sind Fehleinschätzungen seitens des Personals nicht ausgeschlossen. Eine Automatisierung der Überwachung birgt jedoch das Problem, dass es sich bei der zu bewältigenden Aufgabe um ein sicherheitsrelevantes Thema (Sicherheit ist im Rahmen dieser Erfindungsbeschreibung im Sinne der Betriebssicherheit, auch Safety genannt, zu verstehen) handelt, sodass eine Automatisierung den Anforderungen an die Sicherheit im Bahnbetrieb genügen muss.

Um die Zuverlässigkeit einer Hinderniserkennung im Bahnverkehr zu steigen sind in der Vergangenheit verschiedene Ansätze verfolgt worden. Gemäß der EP 4124542 A1 und der EP 4299411 A1 werden zu diesem Zweck z. B. Marker verwendet, die eine Information in Form einer Kodierung für die Erfassung als Objekte tragen. Diese sollen die Hinderniserkennung z. B. in einem Bahnübergang sicherer machen, weil die Erkennung aller Marker als Beweis gewertet wird, das kein die Marker verdeckendes Hindernis vorhanden ist. In der EP 4389558 A1 wird zudem vorgeschlagen, dass eine Hinderniserkennung im Betrieb eines spurgeführten Fahrzeugs erprobt werden kann, um die Zuverlässigkeit der Hinderniserkennung zu steigern.

### Zusammenfassung der Erfindung

Die Aufgabe der Erfindung besteht darin, die beschriebenen Probleme im Stand der Technik zu beheben. Insbesondere ist es Aufgabe, dass ein Verfahren zum Überwachen eines Gleisabschnitts anzugeben, mit dem eine Überwachung automatisiert werden kann und gleichzeitig ein hohes Sicherheitsniveau erreicht werden kann. Weiterhin ist es Aufgabe der Erfindung, ein Fahrzeug, ein Computerprogrammprodukt und ein computerlesbares Speichermedium anzugeben, mit dem das verbesserte Verfahren durchführbar ist.

Beschrieben wird gemäß einem ersten Aspekt der Erfindung ein Verfahren zum Überwachen eines Gleisabschnitts auf Hindernisse, bei dem zum Überwachen der Gleisabschnitt von mindestens einem ersten bildgebenden Sensor und mindestens einem zweiten bildgebenden Sensor erfasst wird.

Als bildgebende Sensoren werden Sensoren verstanden, deren Messwerte in ein Bild der zu überwachenden Umgebung, also vorrangig des Gleisabschnitts und der Bahnsteigkante, umgewandelt werden können. Hierbei kann es sich beispielsweise um optische Kameras, Radars, Lidar und dergleichen handeln.

Ist im Rahmen dieser Erfindungsbeschreibung von einem Gleisabschnitt die Rede, so handelt es sich hierbei um die Gleisanlage, aufweisend einen Oberbau, bestehend hauptsächlich aus den Schienen und den Schwellen (außerdem beispielsweise Befestigungsmittel für die Schienen) sowie einen Unterbau, der den Untergrund für die Schwellen zur Verfügung stellt, beispielsweise eine Schüttung oder eine Betonunterlage. Es wird ohne weiteres deutlich, dass die genannten Komponenten des Gleisabschnitts einen Teil der sichtbaren Oberfläche bilden und somit auch im bildgebenden Verfahren abgebildet werden. Werden diese Komponenten jedoch durch ein Objekt verdeckt, so lässt sich dies in an sich bekannter Weise ermitteln, indem die durch das bildgebende Verfahren erzeugten Bilder ausgewertet werden. Hierbei kann sich das Verfahren beispielsweise einer rechnergestützt erzeugten künstlichen Intelligenz bedienen.

Rechnergestützt oder computerimplementiert ist eine Vorrichtung, wenn diese eine Rechenumgebung aufweist, oder ein Verfahren, wenn eine Rechenumgebung mindestens einen Verfahrensschritt des Verfahrens ausführt.

Eine Rechenumgebung ist eine IT-Infrastruktur, bestehend aus Funktionskomponenten wie Prozessoren, Speichereinheiten, Programmen und aus mit den Programmen zu verarbeitenden Daten, die zur Ausführung mindestens einer Applikation, die eine Aufgabe zu erfüllen hat, verwendet werden. Weitere Funktionskomponenten können aus Sensoren und Aktuatoren bestehen, welche eine Interaktion der Rechenumgebung mit der Außenwelt ermöglichen. Die IT-Infrastruktur kann auch als Netzwerk der genannten Funktionskomponenten organisiert sein.

Recheninstanzen bilden innerhalb einer Rechenumgebung funktionale Einheiten aus, die Applikationen (gegeben beispielsweise durch eine Anzahl von Programmmodulen) zugeordnet werden können und diese ausführen können. Diese funktionalen Einheiten bilden bei der Ausführung der Applikation physikalisch (beispielsweise Computer, Prozessor) und/oder virtuell (beispielsweise Programmmodul) in sich geschlossene Systeme.

Computer sind aus mehreren Funktionskomponenten bestehende elektronische Geräte mit Datenverarbeitungseigenschaften. Computer können beispielsweise Clients, Server, Handheld-Computer, Kommunikationsgeräte und andere elektronische Geräte zur Datenverarbeitung sein, die Prozessoren und Speichereinheiten aufweisen können und über Schnittstellen auch zu einem Netzwerk zusammengeschlossen sein können.

Prozessoren können beispielsweise Wandler, Sensoren zur Erzeugung von Messsignalen oder elektronische Schaltungen sein. Bei einem Prozessor kann es sich um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen und Daten handeln. Auch kann unter einem Prozessor ein virtualisierter Prozessor oder eine Soft-CPU verstanden werden.

Speichereinheiten können auf computerlesbaren Speichern in Form von Arbeitsspeichern (engl. Random-Access Memory, RAM) oder Datenspeichern (Festplatte oder Datenträger) ausgeführt sein.

Programmmodule sind einzelne Software-Funktionseinheiten, die einen erfindungsgemäßen Programmablauf von Verfahrensschritten ermöglichen. Diese Software-Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Schnittstellen können hardwaretechnisch, beispielsweise kabelgebunden oder als Funkverbindung, oder softwaretechnisch, beispielsweise als Interaktion zwischen einzelnen Programmmodulen eines oder mehrerer Computerprogramme, realisiert sein und dienen einem Austausch von Daten vorzugsweise in Form von digitalen Datensätzen oder analogen Signalen.

Zur Vermeidung von Missverständnissen sei an dieser Stelle angemerkt, dass einzelne Anspruchsmerkmale mit kleinen lateinischen Buchstaben durchnummeriert werden, ohne dass dabei Rücksicht auf die Anspruchsnummerierung genommen wird. Dies bedeutet, dass jeder Buchstabe im gesamten Anspruchssatz nur einmal vorkommt, was eine eindeutige Adressierung der betreffenden Anspruchsmerkmale ohne Nennung der Anspruchsnummer ermöglicht. Deswegen kommt der Reihenfolge der Buchstaben jedoch keine Bedeutung zu.

Erfindungsgemäß ist vorgesehen, dass
a) der mindestens eine erste Sensor und der mindestens eine zweite Sensor derart auf den Gleisabschnitt ausgerichtet sind, dass jeder Ort des Gleisabschnitts in je einem ersten Bild des mindestens einen ersten Sensors und je einem zweiten Bild des mindestens einen zweiten Sensors vorhanden ist,
b) die ersten Bilder und zweiten Bilder rechnergestützt auf Hindernisse im Gleisabschnitt hin analysiert werden,
c) ein auf das Vorhandensein eines Hindernisses hinweisendes Signal immer erzeugt wird, wenn ein Hindernis durch das Analysieren sowohl in dem mindestens einen der ersten Bilder als auch in dem mindestens einem der zweiten Bilder erkannt wurde,
d) ein auf das Vorhandensein eines Hindernisses hinweisendes Signal, wenn das Hindernis durch das Analysieren nur in dem mindestens einem der ersten Bilder oder nur in dem mindestens einem der zweiten Bilder erkannt wurde, nur dann erzeugt wird, wenn das erkannte Hindernis durch das Analysieren als Hindernis einer vorgegebenen kritischen Kategorie erkannt wurde, und nicht erzeugt wird, wenn das erkannte Hindernis durch das Analysieren als Hindernis einer vorgegebenen unkritischen Kategorie erkannt wurde,
e) ein auf einen Fehler hinweisendes erstes Signal immer erzeugt wird, wenn das Hindernis durch das Analysieren nur in dem mindestens einem der ersten Bilder oder nur in dem mindestens einem der zweiten Bilder erkannt wurde.

Die in dieser Erfindungsbeschreibung verwendete Begriffe haben die folgende Bedeutung.

Ist im Rahmen dieser Erfindungsbeschreibung von einem ersten Sensor und einem zweiten Sensor die Rede, so kann der erste Sensor an das Fahrzeug gebunden sein und daher auf diesem Fahrzeug betrieben werden oder der erste Sensor kann auch an den Gleisabschnitt gebunden sein. Der zweite Sensor ist an den Gleisabschnitt gebunden, und somit ortsfest installiert, damit dieser dauerhaft an dem betreffenden Gleisabschnitt betrieben werden kann. Demgegenüber kann der erste Sensor auf dem Fahrzeug nur auf dem betreffenden Gleisabschnitt betrieben werden, wenn dieser Gleisabschnitt durch das Fahrzeug passiert wird oder alternativ ebenfalls dauerhaft installiert sein. Kommen auf dem Fahrzeug mehrere Sensoren zum erfindungsgemäßen Zweck zum Einsatz, so handelt es sich bei allen diesen Sensoren um erste Sensoren. Kommen an dem Gleisabschnitt mehrere ortsfeste zweite Sensoren zum erfindungsgemäßen Zweck zum Einsatz, so handelt es sich bei diesen allen um zweite Sensoren. Kommen an dem Gleisabschnitt fest installierte erste Sensoren und zweite Sensoren zum Einsatz, so bilden diese Sensoren jeweils eine Gruppe von Sensoren, wobei die erste Gruppe sowie die zweite Gruppe dazu verwendet wird, Redundanz bei der Erfassung von Objekten an dem Gleisabschnitt zu erzeugen. Die Zuordnung zur jeweiligen ersten Gruppe und zweiten Gruppe von Sensoren erfolgt also mit Blick darauf, dass ein Objekt immer durch mindestens einen Sensor der ersten Gruppe und mindestens einen Sensor der zweiten Gruppe gleichzeitig erfasst werden kann (Erfassungsredundanz für Objekte).

Wenn im Rahmen dieser Erfindungsbeschreibung von einem Erfassen durch Erzeugen von Bildern die Rede ist, so ist damit gemeint, dass der bildgebende Sensor den Gleisabschnitt abtastet (scannt) oder vorhandene von dem Gleisabschnitt ausgehende Strahlung misst. Dies kann beispielsweise optisch durch einen Bildsensor erfolgen aber auch beispielsweise durch Abtastung mittels Radar, wobei auch mithilfe einer Radarabtastung ein Bild erzeugt werden kann.

Ist von einer Überlappung der Bilder die Rede, geht es darum, dass der überlappende Bereich, der vorzugsweise auch 100 % der beiden betrachteten Bilder ausmachen kann, sowohl durch einen ersten Sensor als auch durch einen zweiten Sensor aufgenommen wurde. Mit anderen Worten wurde das Bild redundant durch zwei Bilderfassungssysteme, nämlich dem streckenseitigen, ortsfest gebundenen und dem fahrzeugseitigen, mobilen oder einem weiteren streckenseitigen, ortsfest gebundenen Erfassungssystem erfasst. Hierdurch entsteht vorteilhaft Redundanz, wobei diese für eine Ausfalloffenbarung der beiden Systeme genutzt werden kann (hierzu im Folgenden noch mehr). Somit unterstützen sich die beiden Systeme gegenseitig, um dauerhaft deren Funktionssicherheit (Safety) zu überprüfen.

Als Hindernisse werden im Sinne der Erfindung alle Objekte bezeichnet, deren Anwesenheit im Gleisabschnitt erfasst werden. Als Beispiele seien Menschen, Tiere oder größere unbelebte Objekte zu nennen. Zu unbelebten Objekten werden auch Pflanzen oder Pflanzenteile gezählt, da diese sich nicht eigenständig bewegen können. Diese Hindernisse sind kritische Hindernisse (weil entweder die Hindernisse oder das Fahrzeug nicht gefährdet werden darf) und können durch eine kritische Kategorie vorgegeben werden, die im Rahmen des erfindungsgemäßen Verfahrens den erkannten Objekten zugeordnet werden kann. Objekte, die zur Bahnanlage im weiteren Sinne gehören und den Gleisabschnitt bedecken, wie zum Beispiel Balisengehäuse, zählen eigentliche nicht als Hindernisse im eigentlichen Sinne, können aber zur Überprüfung der Ausfallsicherheit (hierzu im Folgenden noch mehr) als Hindernisse einer vorgegebenen unkritischen Kategorie klassifiziert werden. Weiterhin gibt es (echte) Hindernisse, die aufgrund ihrer Größe keine Gefahr für das Fahrzeug darstellen und auch selbst nicht geschützt werden müssen, zum Beispiel Unrat im Gleisbett oder dergleichen. Auch diese Hindernisse können der unkritischen Kategorie zugeordnet werden.

Ein auf ein Hindernis hinweisendes Signal ist aufgrund seiner Charakteristik dahingehend zu interpretieren, dass ein Fremdkörper (oder ein als unkritisches Hindernis kategorisiertes Objekt der Bahnanlage) im Gleisabschnitt erkannt wurde. Dieses soll im Folgenden auch kurz als Hindernissignal bezeichnet werden. Ein auf einen Fehler hinweisendes Signal ist aufgrund seiner Charakteristik dahingehend zu interpretieren, dass ein Fehler vorliegt, der dazu führt, dass ein Fremdkörper nur einmalig erkannt wurde. Ein Fehler muss deswegen vorliegen, weil die Überlappung der erzeugten Bilder ausreicht, damit jeder Ort des Gleisabschnitts in mindestens zwei Bildern vorhanden ist. Dies bedeutet jedoch auch, dass ein erkannter Fremdkörper die Entstehung von mindestens zwei Bildern beeinflusst. Wenn ein Fremdkörper somit nur einmal erkannt wurde, liegt mit Bezug auf den ordnungsgemäßen Ablauf des Verfahrens ein Fehler vor, der unterschiedliche Ursachen haben kann.
1) Ein Fremdkörper könnte so am Bildrand platziert sein, dass dieser nicht ganz abgebildet wird und infolgedessen nicht erkannt wird.
2) Die Bilderkennung in einem Bild könnte nicht gelungen sein, obwohl der Fremdkörper vollständig in dem Bild platziert ist.
3) Ein bildgebender Sensor könnte defekt sein, beispielsweise vollständig ausgefallen sein.

Somit kann das Fehlersignal in mehrfacher Weise interpretiert werden und unterschiedliche Maßnahmen erforderlich machen. Die am Verfahren beteiligte

Hardware sowie Software kann auf ihre ordnungsgemäße Funktion hin überprüft werden (eine Wartung kann beispielsweise angefordert werden). Außerdem ist das Vorhandensein eines Hindernisses wahrscheinlich, weswegen auch in diesem Fall das Hindernissignal erzeugt wird. Mit anderen Worten wird die Tatsache, dass ein Fehlersignal erzeugt wird, nicht zwingend dahingehend interpretiert, dass ein erzeugtes Hindernissignal zu Unrecht erzeugt wurde, auch wenn dieser Fall nicht ausgeschlossen werden kann. Im Interesse der Betriebssicherheit (Safety) wird erfindungsgemäß im Zweifelsfalle so gehandelt, als ob das Hindernissignal zu Recht erzeugt wurde, dies aber nur, wenn das Hindernis der kritischen Kategorie zugeordnet wurde. Wenn das Hindernis der unkritischen Kategorie zugeordnet wurde, kann dieses ignoriert werden, unabhängig davon, ob dessen Erkennung fehlerhaft oder fehlerfrei war. Hier ist vielmehr lediglich die Fehleranalyse von Bedeutung, um eine Ausfalloffenbarung für das erfindungsgemäßen Sensorsystem zu gewährleisten.

Ein Vorteil der Erfindung besteht darin, dass durch die redundante Erzeugung von Hindernissignalen die erwähnte zusätzliche Ausfalloffenbarung für die am Verfahren beteiligte Hardware sowie Software fest in den Verfahrensablauf implementiert ist. Anders ausgedrückt muss bei einem ordnungsgemäßen Ablauf des Verfahrens ein Hindernissignal auf einer Sensorebene (such Sensor Layer oder SL genannt) des Verfahrens für das betreffende Objekt immer zweimal, also redundant erzeugt werden. Ist dies nicht der Fall, weist dies auf einen der oben genannten Fehler 1) bis 3) hin, der auf einer Sensor-Überwachungsebene (auch Sensor Evaluation Layer, kurz SEL genannt) des Verfahrens erkannt werden kann. Ein Teilausfall des Systems bewirkt daher, dass dieses noch zur Erkennung von Fremdkörpern im Gleisabschnitt verwendet werden kann. Dies wird dadurch bewirkt, dass auch die einmalige Erkennung eines Objektes als Hindernis, wie oben erklärt, zum Anlass genommen wird, ein Hindernissignal zu erzeugen, zumindest, wenn dieses Hindernis der kritischen Kategorie angehört. Die hierfür notwendige Bewertung wird auf einer Sicherheits- und Verfügbarkeits-Zwischenebene (auch Safety & Availability interface Layer, kurz SAIL genannt) durchgeführt. Als Zwischenebene wird der SAIL deswegen bezeichnet, weil auf dieser Ebene entschieden wird, wie mit den im SL erzeugten Sensordaten unter Berücksichtigung der im SEL durchgeführten Bewertung dieser Daten im weiteren Verfahren umgegangen werden muss (Verwendung der Daten für die funktionssichere Anwendung, Sperrung der Daten und Erzeugen eines Alarms, Wartungsmaßnahmen im SL, hierzu im Folgenden mehr).

Parallel zum Betrieb des Gleisabschnitts kann das Verfahren unter durch den SAIL abgesicherten Bedingungen rechtzeitig instandgesetzt werden, sodass es im Normalfall nicht zu einem Komplettausfall kommt. Beispielsweise kann eine defekte Kamera ausgewechselt werden. Hierdurch steigt die Betriebssicherheit des Verfahrens, sodass dieses vorteilhaft auch in sicherheitsrelevanten Anwendungen wie der hier vorliegenden Überwachung eines an einem Bahnsteig liegenden Gleisabschnitts verwendet werden kann. Idealerweise werden die für eine solche Aufgabe im Bahnbetrieb geltenden Sicherheitslevel SIL-1 und SIL-2 erreichbar.

Die Anforderungen an die Zertifizierung sicherheitsrelevanter Anwendungen beispielsweise in der Bahntechnik sind sehr hoch. Gemäß der internationalen Norm IEC 61508 beziehungsweise spezifisch für den Bahnbereich gemäß der europäischen Norm EN 50129 werden für Sicherheitsfunktionen vier Sicherheits-Integritätslevel oder Englisch Safety Integrity Level (SIL) beziehungsweise Sicherheits-Anforderungsstufen für die geforderte funktionale Sicherheit (Safety) unterschieden. Hierbei stellt der Sicherheits-Integritätslevel 4 die höchste und der Sicherheits-Integritätslevel 1 die niedrigste Stufe der Sicherheits-Integrität dar. Der jeweilige Sicherheits-Integritätslevel beeinflusst das Vertrauensintervall eines Messwertes dahingehend, dass das Vertrauensintervall umso kleiner ist, je höher der Sicherheits-Integritätslevel ist, der seitens der jeweiligen Vorrichtung zu erfüllen ist. Die Dimension der funktionalen Sicherheit der verschiedenen Sicherheits-Integritätslevel lässt sich anschaulich mit der zu erwartenden Häufigkeit eines Ausfalls des sicherheitsrelevanten Systems MTBF (Mean Time Between Failures) beschreiben, wobei dies in Jahren (a) angegeben wird. Diese liegt bei SIL-1 im Bereich von 10 ... 100 a, bei SIL-2 im Bereich von 100 ... 1000 a, bei SIL-3 im Bereich von 1000 ... 10000 a, und bei SIL-4 im Bereich von 10000 ... 100000 a.

Beschrieben wird gemäß einem weiteren Aspekt der Erfindung Bahnanlage mit einem Gleisabschnitt, wobei in der Bahnanlage eine Vielzahl von bildgebenden Sensoren zur Überwachung des Gleisabschnitts installiert sind. Gemäß diesem Aspekt ist erfindungsgemäß vorgesehen, dass die Bahnanlage eine Rechenumgebung aufweist, die eingerichtet ist, ein Verfahren nach einem der vorstehenden Ansprüche durchzuführen. Die mit diesem Aspekt der Erfindung verbundenen Vorteile sind vorstehend bereits erläutert worden, wobei auf diese Vorteile verwiesen wird.

Beschrieben wird gemäß einem weiteren Aspekt der Erfindung Computerprogrammprodukt, enthaltend Programmbefehle, die durch eine Rechenumgebung ausführbar sind. Gemäß diesem Aspekt ist erfindungsgemäß vorgesehen, dass zumindest die Schritte b), c), d) und e) des Verfahrens nach einem der Ansprüche 1 - 6 ausgeführt wird.

Gemäß der Erfindung wird somit ein Programmmodule enthaltendes Computerprogrammprodukt mit Programmbefehlen beschrieben, wobei die Programmmodule in derselben Recheninstanz oder mehreren Recheninstanzen der Rechenumgebung laufen können. Mittels des Computerprogrammproduktes, das ein Computerprogramm oder mehrere Computerprogramme umfassen kann, sind jeweils das erfindungsgemäße Verfahren und/oder dessen Ausführungsbeispiele ausführbar und mit der Ausführung werden die vorstehend beschriebenen Vorteile erreicht.

Beschrieben wird gemäß einem weiteren Aspekt der Erfindung ein computerlesbares Speichermedium, enthaltend Daten, welche als Datensätze vom Speichermedium gespeichert werden. Gemäß diesem Aspekt ist erfindungsgemäß vorgesehen, dass die Datensätze das vorstehend beschriebene Computerprogrammprodukt nach dem letzten voranstehenden Anspruch ausführbar machen.

Darüber hinaus wird somit eine Bereitstellungsvorrichtung zum Speichern und/oder Bereitstellen des Computerprogramms in Form eines computerlesbaren Speichermediums beschrieben. Die Bereitstellungsvorrichtung ist beispielsweise eine Speichereinheit, die das Computerprogramm speichert und zum Abruf bereitstellt. Alternativ oder zusätzlich ist die Bereitstellungsvorrichtung ein Netzwerkdienst, ein Computersystem, ein Serversystem, insbesondere ein verteiltes, beispielsweise cloudbasiertes Computersystem oder virtuelles Rechnersystem, welches das Computerprogramm auf einem computerlesbaren Speichermedium speichert und vorzugsweise in Form eines Datenstroms bereitstellt.

Die Bereitstellung erfolgt in Form von Programmmodule beschreibenden Programmdatensätzen als Datei, insbesondere als Downloaddatei, oder als Datenstrom, insbesondere als Downloaddatenstrom, des Computerprogrammproduktes. Das Computerprogrammprodukt wird beispielsweise unter Verwendung der Bereitstellungsvorrichtung in eine Rechenumgebung übertragen, sodass das erfindungsgemäße Verfahren in einer Recheninstanz oder mehreren Recheninstanzen dieser Rechenumgebung zur Ausführung gebracht werden kann.

### Ausgestaltungen der Erfindung

Weiterbildungen der Erfindung beschreibende Varianten werden nachfolgend ohne Beschränkung des grundlegenden Gedankens der Erfindung erläutert.

Gemäß einer Variante sind die oben erklärten Aspekte der Erfindung dadurch bestimmt, dass im Schritt c) gemäß Anspruch 1 ein auf das Vorhandensein eines Hindernisses hinweisendes Signal, wenn das Hindernis durch das Analysieren nur in dem mindestens einem der ersten Bilder oder nur in dem mindestens einem der zweiten Bilder erkannt wurde, auch dann erzeugt wird, wenn das erkannte Hindernis durch das Analysieren weder als Hindernis einer vorgegebenen kritischen Kategorie noch als Hindernis einer vorgegebenen unkritischen Kategorie erkannt wurde.

Ein Vorteil dieser Variante besteht darin, dass die Funktionssicherheit des Verfahrens dahingehend erhöht wird, dass die Wahrscheinlichkeit sinkt, kritische Hindernisse wegen einer falschen Bewertung nicht zu erkennen. Wenn ein Objekt weder als Hindernis einer kritischen Kategorie noch als Hindernis der nicht kritischen Kategorie klassifiziert werden kann, ist es nämlich nicht sicher, ob das Hindernis kritisch ist. In diesem Fall wird deswegen gemäß dieser Variante so vorgegangen, dass dieses Hindernis wie ein kritisches Hindernis behandelt wird, und ein Hindernissignal erzeugt wird.

Gemäß einer Variante sind die oben erklärten Aspekte der Erfindung dadurch bestimmt, dass jeder der zweiten Sensoren einer zweiten Gruppe von mit Abstand zueinander am Gleisabschnitt angeordneten zweiten Sensoren angehört, wobei die erzeugten Bilder der zweiten Gruppe jeweils in einem Grenzbereich jeweils mit benachbarten Bildern aneinandergrenzen, das heißt, dass der Abstand der zweiten Sensoren zueinander so gewählt wird, dass unter Berücksichtigung der durch die Sensoren abbildbaren Bildabschnitte eine Überschneidung oder ein lückenloses Aneinandergrenzen der einzelnen Bilder realisiert wird.

Wenn im Rahmen dieser Erfindungsbeschreibung davon die Rede ist, dass Bilder aneinandergrenzen, dann ist hiermit gemeint, dass die Inhalte der Bilder, die einander benachbart sind, derart zueinander passen, dass ein lückenloses Gesamtbild entsteht. Im Fokus dieses Gesamtbildes steht der zu überwachende Gleisabschnitt, der auf diese Weise in jeder Gruppe der Bilder vollständig und lückenlos abgebildet ist. Der Grenzbereich der Bilder liegt somit am jeweiligen Rand dieser Bilder. Der Grenzbereich der Bilder ist anders ausgedrückt ein Verbindungsbereich zwischen benachbarten Bildern, durch den die Inhalte der Bilder lückenlos aneinandergefügt werden können. Rechnergestützte Algorithmen, die eine solche Ergänzung der Einzelbilder zu einem Gesamtbild ermöglichen, sind an sich allgemein bekannt und müssen daher an dieser Stelle nicht genauer erläutert werden.

Als Grenzbereich kann somit der Randbereich der jeweils benachbarten Bilder bezeichnet werden, an denen diese an das jeweils angrenzende Bild angrenzen. Hierbei kann aus praktischen Gründen (Ausrichtung der Kameras in den Bahnhöfen) auch ein Überschneidungsbereich im Randbereich auftreten. Im Wesentlichen ist jedoch diese Ausgestaltung der Erfindung darauf ausgelegt, einen solchen Überschneidungsbereich nicht zur Erzeugung von redundanten Bildpunkten im Gesamtbild einer Gruppe von Bildern (d. h. der von der einen Gruppe von Sensoren erzeugten Bilder) zu nutzen. Vielmehr wird zur Erzeugung der Redundanz der erste Sensor oder eine Gruppe von mehreren ersten Sensoren auf dem Fahrzeug verwendet. Hierbei ist zu bemerken, dass, wenn sich das Fahrzeug bewegt, auch mit nur einem ersten Sensor ein lückenloses Bild des Gleisabschnitts erzeugt werden kann, da sich der bildgebende erste Sensor mit dem Fahrzeug entlang des Gleisabschnitts bewegen kann. Allerdings könne auch am Fahrzeug mehrere erste Sensoren zum Einsatz kommen, die das eine erste Gruppe von Sensoren bilden.

Dadurch, dass es passend jeweils zu den ersten und zweiten Sensoren auch zwei Gruppen von Bildern gibt, die für sich genommen jeweils eine lückenlose Erfassung des Gleisabschnitts beinhalten, ist die bereits vorstehend erläuterte Redundanz der Abbildung einzelner Bildelemente gewährleistet, und zwar jeweils einmal in der ersten Gruppe und einmal in der zweiten Gruppe. Dies schließt selbstverständlich nicht aus, dass auch eine dritte Gruppe oder weitere Gruppen von Bildern erzeugt werden können, sodass eine dreifache oder sogar mehrfache Redundanz erzeugt wird.

Ein Vorteil dieser Variante besteht darin, dass durch Zuordnung der Sensoren jeweils zur ersten Gruppe (oder Verwendung eines einzelnen ersten Sensors) und zur zweiten Gruppe die Erzeugung der Redundanz bei der Erfassung von Objekten in den Bildern gut gesteuert werden kann. Die Abbildung dieser Objekte erfolgt dann in jeder Gruppe von Bildern genau einmal, also bei der Anwendung einer ersten Gruppe und einer zweiten Gruppe genau zweimal. Dies vereinfacht das Verfahren, mit dem die Erforderlichkeit von Fehlersignalen ermittelt wird. Außerdem lässt sich vorteilhaft das Auftreten eines Fehlers mit einer vergleichsweise hohen Sicherheit ermitteln.

Gemäß einer Variante sind die oben erklärten Aspekte der Erfindung dadurch bestimmt, dass die Funktion des Überwachens des Gleisabschnitts durch den mindestens einen ersten Sensor überprüft wird, indem
f) als Hindernis eine erste Teststruktur im Gleisabschnitt angeordnet wird, deren Überfahren durch das Fahrzeug ohne Kollision möglich ist und deren Position im Gleisabschnitt dem Verfahren als Positionsdatensatz verfügbar sind,
g) die ersten Bilder rechnergestützt auf Hindernisse im Gleisabschnitt hin analysiert werden,
h) ein auf einen Fehler hinweisendes zweites Signal ausgegeben wird, wenn auf der durch den Positionsdatensatz gekennzeichneten Position durch das Analysieren kein Hindernis erkannt wird.

Eine Teststruktur, deren Überfahren durch das Fahrzeug ungefährlich ist, erfordert räumliche Ausdehnungen, die nicht zu einer Kollision führen, wenn das Fahrzeug die Teststruktur quert. Deswegen kann eine solche Teststruktur immer als ein Hindernis der unkritischen Kategorie klassifiziert werden, weswegen der Zugverkehr bei Erkennung dieses Hindernisses nicht unterbrochen wird. Es kann sich beispielsweise um dreidimensionale Attrappen kleinerer Gegenstände handeln. Der Vorteil, dass eine Überfahrt ungefährlich ist, liegt darin, dass diese Teststrukturen dauerhaft im Gleisbett installiert werden können, sodass ein Überprüfen der Funktion des fahrzeugseitigen Systems mit einer Rechenumgebung zur Hinderniserkennung inklusive des fahrzeugseitigen Sensors möglich wird. Hierdurch wird vorteilhaft die Wahrscheinlichkeit einer Ausfalloffenbarung gesteigert, wodurch die Wahrscheinlichkeit, dass unentdeckte Fehler die Funktionssicherheit des Systems gefährden, verringert wird.

Da die Position der Teststruktur aufgrund der Auswertung des Positionsdatensatzes bekannt ist, kann unter Berücksichtigung der Position des Fahrzeugs, die in an sich bekannter Weise mit einer für den Bahnverkehr üblichen Funktionssicherheit (Safety) ermittelt wird, vorhergesagt werden, wo und damit auch wann das als Teststruktur ausgebildete Hindernis erkannt werden muss. Bleibt die erwartete Erkennung aus, weist dies daher auf einen Fehler hin und es kann das zweite Signal generiert werden. Auf diese Weise ist vorteilhaft eine Ausfalloffenbarung für das verwendete Verfahren und die dabei zum Einsatz kommenden Komponenten verwirklicht.

Gemäß einer Variante sind die oben erklärten Aspekte der Erfindung dadurch bestimmt, dass die Funktion des Überwachens des Gleisabschnitts durch den mindesten einen ersten Sensor und den mindestens einen zweiten Sensor überprüft wird, wenn sich auf dem Gleisabschnitt ein Fahrzeug befindet, indem
i) die aktuelle Position des Fahrzeugs in einem Positionsdatensatz verfügbar gemacht wird,
j) die ersten Bilder und die zweiten Bilder rechnergestützt auf Hindernisse im Gleisabschnitt hin analysiert werden,
k) ein auf einen Fehler hinweisendes drittes Signal ausgegeben wird, wenn auf der durch den Positionsdatensatz gekennzeichneten aktuellen Position durch das Analysieren in den ersten Bildern und/oder in den zweiten Bildern kein Hindernis erkannt wird.

Ein Vorteil dieser Variante besteht darin, dass an einem Bahnsteig regelmäßig Fahrzeuge den Gleisabschnitt nutzen, um das Einsteigen und Aussteigen von Personen zu ermöglichen. Immer dann kann eine Testroutine durchgeführt werden. Dabei muss das Fahrzeug erkannt werden. So kann regelmäßig eine Überprüfung der Funktion des Verfahrens und der an dessen Durchführung beteiligten Hardwarekomponenten wie zum Beispiel den Sensoren durchgeführt werden. Dies steigert vorteilhaft die Sicherheit bei der Durchführung des Verfahrens, wobei durch die Testroutine eine Ausfalloffenbarung für Komponenten der an der Durchführung des Verfahrens beteiligten Komponenten ermöglicht wird.

Gemäß einer Variante sind die oben erklärten Aspekte der Erfindung dadurch bestimmt, dass eine manuelle Überwachung des Gleisabschnittes auf Hindernisse durch Bahnpersonal angefordert wird, sobald das zweite Signal oder das dritte Signal ausgewertet wurde.

Bei dieser Variante der Erfindung wird vorteilhaft berücksichtigt, dass, sobald ein Fehlersignal erzeugt wurde (erstes Signal, zweites Signal oder drittes Signal, welches einen Fehler anzeigt), der Betrieb einer sicheren rechnergestützten Hinderniserkennung nicht mehr gewährleistet ist. In diesem Fall kann auf ein manuelles Erfassen von Hindernissen beispielsweise durch das Bahnhofspersonal oder den Zugführer zurückgegriffen werden. Eventuell muss hierbei auch die zulässige Höchstgeschwindigkeit abgesenkt werden, um eine zuverlässige manuelle Überwachung der Strecke zu gewährleisten. Vorteilhaft muss der Zugbetrieb jedoch nicht vollständig eingestellt werden, da es sich lediglich um die Überbereifung der Strecke auf Hindernisse handelt, während der Zugbetrieb an sich noch zuverlässig durchgeführt werden kann.

### Exemplarische Ausführungsbeispiele der Zeichnung

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Varianten der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch mit den vorstehend beschriebenen Varianten der Erfindung kombinierbar.
Figur 1 zeigt ein Ausführungsbeispiel der erfindungsgemäßen Vorrichtung der Bahnanlage mit ihren Wirkzusammenhängen zwischen den zum Einsatz kommenden Funktionskomponenten schematisch.
Figur 2 zeigt ein Ausführungsbeispiel einer Rechenumgebung für die Vorrichtung gemäß Figur 1 als Blockschaltbild der einzelnen Funktionskomponenten und der zwischen diesen ausgebildeten Schnittstellen, wobei einzelne Recheninstanzen Programmmodule ausführen, die jeweils in einem oder mehreren der beispielhaft dargestellten Computer ablaufen können und wobei die gezeigten Schnittstellen demgemäß softwaretechnisch in einem Computer oder hardwaretechnisch zwischen verschiedenen Computern ausgeführt sein können.
Figur 3 und Figur 4 zeigen schematische Beispiele für einen präparierten Gleisabschnitt mit Testkörper und in diesem Gleisabschnitt erzeugte Bilder (beispielsweise an einem Bahnübergang) mit einer Person als Hindernis.
Figur 5 zeigt ein Ausführungsbeispiel des erfindungsgemäßen Verfahrens als Flussdiagramm, wobei die gezeigten Verfahrensschritte einzeln oder in Gruppen durch Programmmodule verwirklicht sein können und wobei die Recheninstanzen und Schnittstellen gemäß Figur 2 beispielhaft angedeutet sind.

### Detaillierte Beschreibung der Ausführungsbeispiele

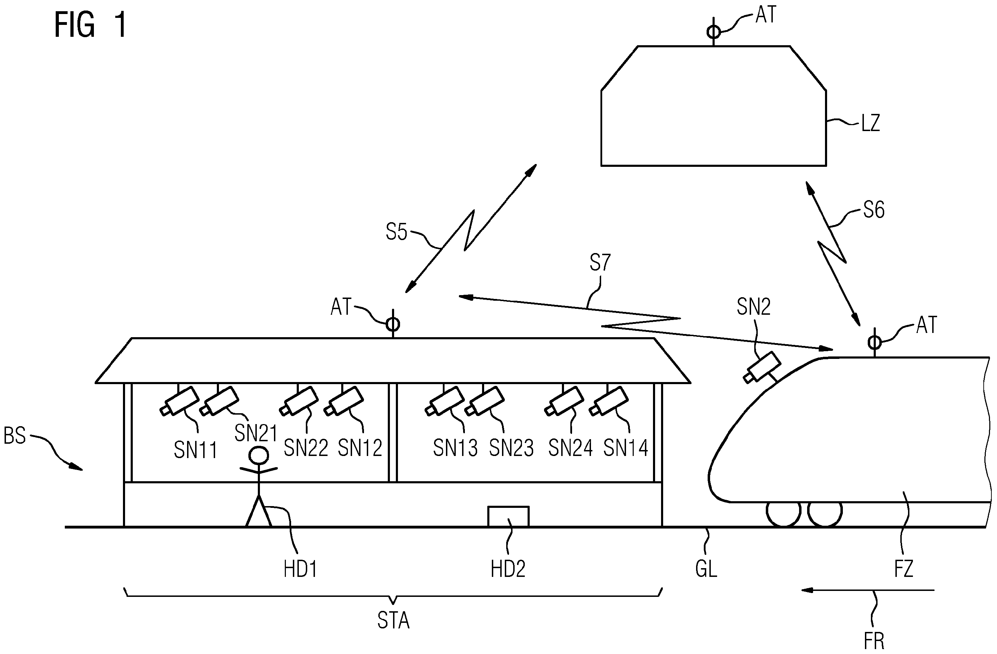

Gemäß Figur 1 ist ein Bahnsteig BS und ein Gleis GL, auf dem ein Fahrzeug FZ in den Bahnsteig BS einfährt, dargestellt. Weiterhin gibt es eine Leitzentrale LZ, in der beispielsweise ein aktueller Ist-Fahrplan überwacht werden kann. Zwischen der Leitzentrale LZ, dem Fahrzeug FZ und dem Bahnsteig BS ist eine Kommunikation mittels Antennen AT über eine fünfte Schnittstelle S5, eine sechste Schnittstelle S6 und eine siebente Schnittstelle S7 möglich.

Der Bahnsteig BS ist mit vier ersten Sensoren SN11, SN12, SN13, SN14, ausgestattet, bei denen sich es bei dem Beispiel gemäß Figur 1 um Überwachungskameras handelt. Diese überwachen einen Gleisabschnitt STA des Gleises GL, der sich vor dem Bahnsteig BS befindet. Wenn ein lebendiges Hindernis HD1 in Form eines Menschen oder ein unbelebtes Hindernis HD2 in Form eines Objektes auf dem Gleis GL befinden, wird dies durch die Sensoren erfasst. Gleichzeitig ist auf dem Fahrzeug FZ ein zweiter Sensor SN2 vorgesehen, der in Fahrtrichtung FR mit Bildachse auf das Gleis GL ausgerichtet ist und somit in Abhängigkeit von der Entfernung jeweils auch das belebte Hindernis sowie das unbelebte Hindernis HD2 erfassen kann. Hinsichtlich der Hinderniserkennung besteht daher an dem Bahnsteig BS eine Redundanz der bildgebenden Erfassungssysteme auf dem Fahrzeug FZ und am Bahnsteig BS.

Alternativ zum zweiten Sensor SN2 können auch mehrere zweite Sensoren SN21 SN22, SN23, SN24 zum Einsatz kommen, die in derselben Anzahl wie die ersten Sensoren SN11, SN12, SN13, SN14 jeweils redundant mit diesen angeordnet sind, derart, dass jeder der paarweise angeordneten ersten und zweiten Sensoren einen Gleisabschnitt STA parallel und damit redundant überwachen. Bei dieser Variante ist eine Überwachung jederzeit redundant möglich und nicht nur, wenn gerade ein Fahrzeug FZ an dem Bahnsteig BS einfährt.

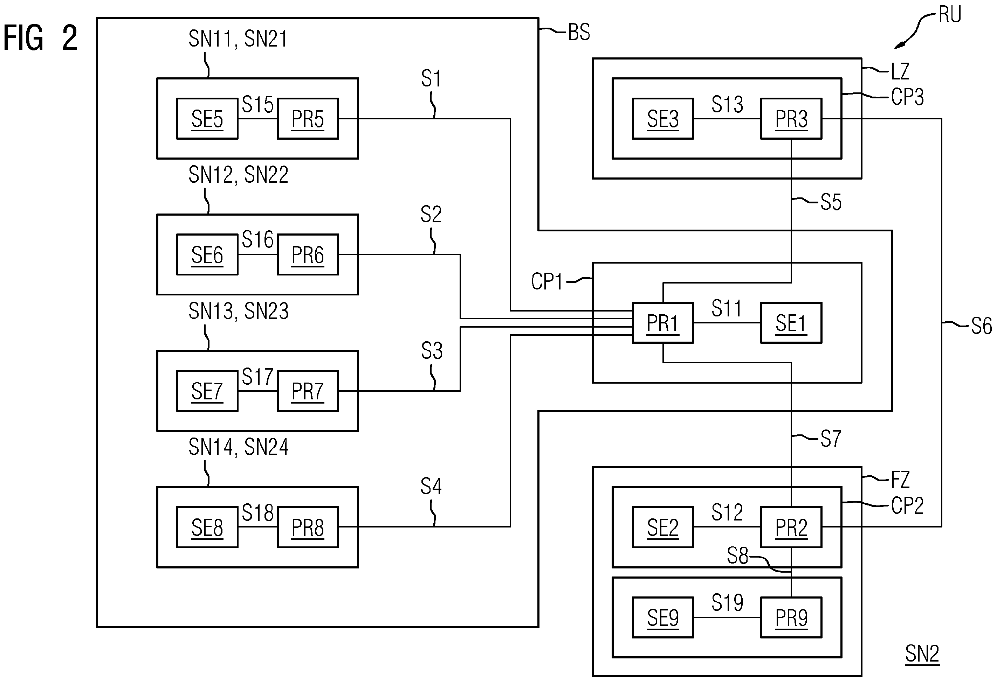

Eine Rechenumgebung RU, in der das erfindungsgemäße Verfahren abläuft, kann einer gemeinsamen Betrachtung von Figur 1 und Figur 2 entnommen werden. Die zum Einsatz kommenden Recheninstanzen und Funktionskomponenten interagieren durch Schnittstellen untereinander. Zu erkennen ist, das auf dem Bahnsteig BS ein erster Computer CP1 (vergleiche Figur 2) mit den ersten Sensoren SN11, SN12, SN13, SN14 kommuniziert. In der Leitzentrale LZ kommt ein dritter Computer CP3 zum Einsatz und im Fahrzeug FZ ist ein zweiter Computer CP2 vorgesehen, der über eine achte Schnittstelle S8 mit dem zweiten Sensor SN2 kommuniziert. Selbstverständlich können die durch die Leitzentrale LZ den Bahnsteig BS und das Fahrzeug FZ gebildeten Rechenumgebungen RU auch mehrere Computer enthalten, von denen die in Figur 2 dargestellten lediglich beispielhaft zur Darstellung der Kommunikationsverbindungen dienen.

Gemäß Figur 2 sind die jeweils Recheninstanzen bildenden Computer und Sensoren näher dargestellt. Bei dem ersten Computer CP1 ist ein erster Prozessor PR1 mit einer ersten Speichereinheit SE1 durch eine elfte Schnittstelle S11 verbunden. Bei dem zweiten Computer CP2 ist ein zweiter Prozessor PR2 mit einer zweiten Speichereinheit SE2 durch eine zwölfte Schnittstelle S12 verbunden. Bei dem dritten Computer CP3 ist ein dritter Prozessor PR3 mit einer dritten Speichereinheit SE3 durch eine 13. Schnittstelle S13 verbunden. Die Sensorpaare bei der zweiten Varante gemäß Figur 1 (z. B. S11 und S21) sind gemäß Figur 2 in einer Hardwarekomponente zusammengefasst (beispielsweise als Stereokameras), könnten aber auch in nicht dargestellter Weise durch unterschiedliche Hardwarekomponenten mit jeweils eigenen Prozessoren und Speichereinheiten ausgebildet sein. Bei den Sensoren SN11, SN21 ist ein fünfter Prozessor PR5 mit einer fünften Speichereinheit SE5 durch eine 15. Schnittstelle S15 verbunden. Bei den Sensoren SN12, SN22 ist ein sechster Prozessor PR6 mit einer sechsten Speichereinheit SE6 durch eine 16. Schnittstelle S16 verbunden. Bei den Sensor SN13, SN23 ist ein siebenter Prozessor PR7 mit einer siebenten Speichereinheit SE7 durch eine 17. Schnittstelle S17 verbunden. Bei den Sensoren SN14, SN24 ist ein achter Prozessor PR8 mit einer achten Speichereinheit SE8 durch eine 18. Schnittstelle S18 verbunden. Bei dem zweiten Sensor SN2 ist ein neunter Prozessor PR9 mit einer neunten Speichereinheit SE9 durch eine 19. Schnittstelle S19 verbunden.

Einer Kombination aus Figur 1 und Figur 2 kann folgendes entnommen werden. Durch eine erste Schnittstelle S1 sind der fünfte Prozessor PR5 des ersten Sensors SN11, SN12, SN13, SN14 und der erste Prozessor PR1 des ersten Computers CP1 miteinander verbunden. Durch eine zweite Schnittstelle S2 sind der sechste Prozessor PR6 des zweiten Sensors SN2 und der erste Prozessor PR1 des ersten Computers CP1 miteinander verbunden. Durch eine dritte Schnittstelle S3 sind ein der siebente Prozessor PR7 des dritten Sensors und der erste Prozessor PR1 des ersten Computers CP1 miteinander verbunden. Durch eine vierte Schnittstelle S4 sind der achte Prozessor PR8 des vierten Sensors und der erste Prozessor PR1 des ersten Computers CP1 miteinander verbunden. Durch die fünfte Schnittstelle S5 sind der erste Prozessor PR1 und der zweite Prozessor PR2 miteinander verbunden. Durch die sechste Schnittstelle S6 sind zweite Prozessor PR2 und der dritte Prozessor PR3 miteinander verbunden. Durch die siebente Schnittstelle S7 sind der erste Prozessor PR1 und der zweite Prozessor PR2 miteinander verbunden.

Ist im Rahmen dieser Erfindungsbeschreibung nur von Computern, Prozessoren, Speichereinheiten, Sensoren oder Schnittstellen die Rede, beziehen sich die Angaben allgemein auf alle der vorstehend im Einzelnen benannten Computer, Prozessoren, Speichereinheiten und weiteren Funktionskomponenten, die verbunden durch die Schnittstellen zur Bildung der Rechenumgebung RU beitragen.

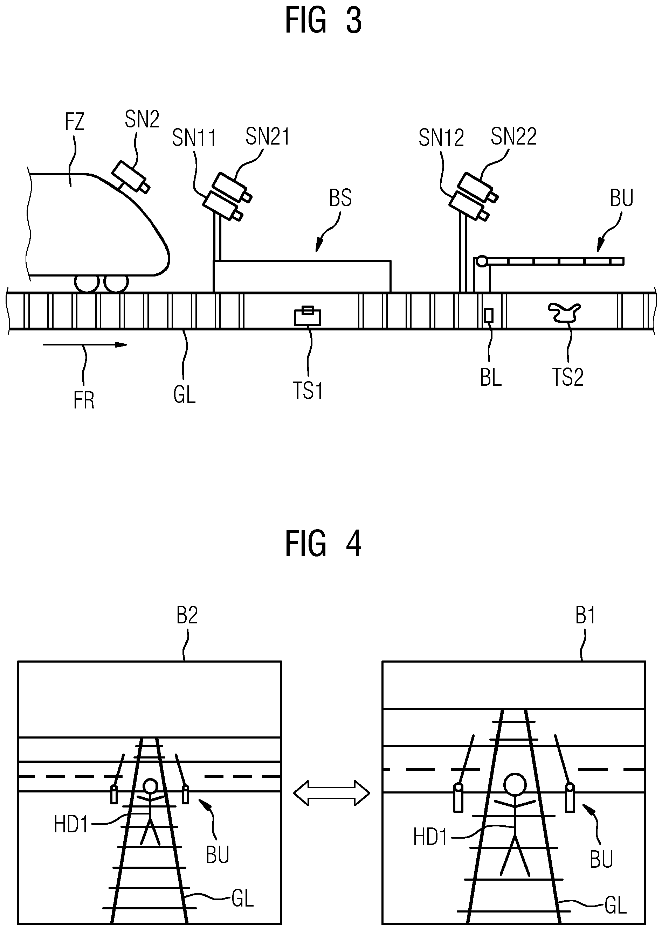

In Figur 3 ist noch einmal ein Fahrzeug FZ auf dem Gleis GL sowie ein Bahnsteig BS und zusätzlich ein Bahnübergang BU am Gleis GL dargestellt. Erste Sensoren SN11, SN12, SN13, SN14 sowie zweite Sensoren, SN21, SN22, kommen ebenfalls zum Einsatz. Das Gleis GL ist in der Darstellung gemäß Figur 3 in die Zeichenebene geklappt dargestellt, um zu zeigen, dass in diesem auf dem Untergrund eine erste Teststruktur TS1 in Form eines Koffers und eine zweite Teststruktur TS2 in Form von Verpackungsmüll angeordnet sind. Auch eine Balise BL im Gleis GL kann als Teststruktur verwendet werden. In Wirklichkeit handelt es sich jedoch bei der Teststruktur um eine flache Anordnung im Gleisbett, sodass das Fahrzeug FZ ohne Kollision über diese Teststrukturen hinweg fahren kann und diese einer unkritischen Kategorie zugeordnet werden können, sodass ihre Erkennung den Zugbetrieb nicht stört, das keine Sicherheitsmaßnahmen erforderlich sind.

In Figur 4 ist dargestellt, wie die eine Person als erstes Hindernis durch die ersten Sensoren SN11, SN12, SN13, SN14 und die zweiten Sensoren, SN21, SN22, aufgenommene Bilder erscheint. Dargestellt ist ein erstes Bild B1 und ein zweites Bild B12, wobei das erste Bild B1 durch den zweiten Sensor SN2 auf dem Fahrzeug FZ bei Annäherung an den Bahnübergang BU gemäß Figur 3 früher als das zweite Bild B12 durch den zweiten Sensor SN2 S22 aufgenommen wurde, obwohl das erste Hindernis daher aufgrund des Abstandes zu dem jeweiligen bildgebenden Sensor unterschiedlich groß ist, kann dieses dennoch durch eine geeignete Bildverarbeitung in beiden Fällen als dasselbe erste Hindernis identifiziert werden.

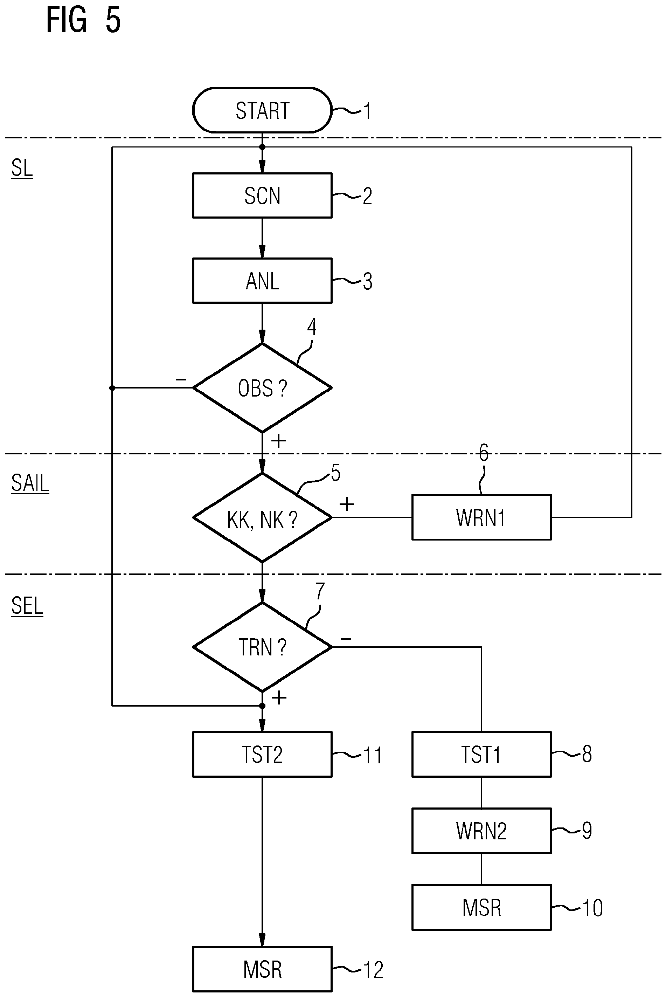

Zusätzlich zur Testprozedur, die zu Figur 5 im Folgenden genauer beschrieben wird, kann somit durch die ersten Sensoren SN11, SN12, SN13, SN14 und den zweiten Sensor SN2 auch Redundanz bei der Überprüfung der Teststruktur erzeugt werden. Der Doppelpfeil gemäß Figur 4 soll andeuten, dass ein Bildabgleich im Sinne einer redundanten Hinderniserkennung auch bei der Testprozedur durchgeführt werden kann, wenn die zweite Teststruktur TS2 sowohl von einem der ersten Sensoren SN11, SN12, SN13, SN14 als auch von einem der zweiten Sensoren aufgenommen wurde.

Im Folgenden soll das erfindungsgemäße Verfahren beispielhaft, wie im Flussdiagramm gemäß Figur 5 dargestellt, schrittweise erläutert werden. In Figur 5 ist außerdem beispielhaft durch Kästen angedeutet, in welchen Funktionskomponenten und Recheninstanzen gemäß Figur 1 und 2 die einzelnen Schritte durchgeführt werden können. Rechnergestützte Schritte erfolgen in den nicht näher dargestellten Prozessoren. Das Auslesen und Speichern von Daten in die Speichereinheiten ist beispielhaft dargestellt. Soweit hierbei die Schnittstellen gemäß Figur 1 und 2 genutzt werden, sind diese auch in Figur 5 gekennzeichnet.

Das Verfahren gemäß Figur 5 betrifft den Betrieb einer redundanten Sensorplattform zur Überwachung eines Streckenabschnitts, wobei das Verfahren hinsichtlich einer Ausfalloffenbarung zusätzlich abgesichert ist. Anders ausgedrückt muss bei einem ordnungsgemäßen Ablauf des Verfahrens ein Hindernissignal auf einer Sensorebene (such Sensor Layer oder SL genannt) des Verfahrens für das betreffende Objekt immer zweimal, also redundant erzeugt werden. Ist dies nicht der Fall, weist dies auf einen Fehler hin, der auf einer Sensor-Überwachungsebene (auch Sensor Evaluation Layer, kurz SEL genannt) des Verfahrens erkannt werden kann. Ein Teilausfall des Systems bewirkt daher, dass dieses noch zur Erkennung von Fremdkörpern im Gleisabschnitt STA verwendet werden kann, allerdings in einer Art abgesicherten Modus. Dies wird dadurch bewirkt, dass auch die einmalige Erkennung eines Objektes als Hindernis, zum Anlass genommen wird, ein Hindernissignal zu erzeugen, zumindest, wenn dieses Hindernis der kritischen Kategorie angehört. Die hierfür notwendige Bewertung wird auf einer Sicherheits- und Verfügbarkeits-Zwischenebene (auch Safety & Availability interface Layer, kurz SAIL genannt) durchgeführt. Als Zwischenebene wird der SAIL deswegen bezeichnet, weil auf dieser Ebene entschieden wird, wie mit den im SL erzeugten Sensordaten unter Berücksichtigung der im SEL durchgeführten Bewertung dieser Daten im weiteren Verfahren umgegangen werden muss (Verwendung der Daten für die funktionssichere Anwendung, Sperrung der Daten und Erzeugen eines Alarms, Wartungsmaßnahmen im SL). Dies wird im Folgenden anhand von Figur 5 erläutert, wo der SL, der SEL und der SAIL eingezeichnet sind.

In einem ersten Schritt 1 erfolgt der Start des Verfahrens (kurz: START).

In einem zweiten Schritt 2 erfolgt die Erfassung des Gleisabschnitts STA mithilfe der ersten und/oder zweiten Sensoren (kurz: SCN). Hierbei entstehen Bilder, auf denen gegebenenfalls Hindernisse zu erkennen sind (vergleiche Figur 1).

In einem dritten Schritt 3 erfolgt eine Analyse der von den Sensoren erzeugten Bilder (kurz: ANL), um Hindernisse auf dem Gleisabschnitt STA zu erkennen und diese bei Bestehen einer Kollisionsgefahr einer kritischen Kategorie und bei Nichtbestehen einer Kollisionsgefahr einer unkritischen Kategorie zuzuordnen. Die Hinderniserkennung selbst erfolgt in an sich bekannter Weise durch geeignete Analyseverfahren für rechnergestützt erzeugte Bilder. Zu dem Zweck einer Hinderniserkennung werden in an sich bekannter Weise rechnergestützt die Bilder einer Bildverarbeitung unterzogen und die Bildinhalte mit Blick auf das Vorhandensein von Hindernissen analysiert (Anwendung bekannter Algorithmen zur Bildverarbeitung). Die Zuordnung zur kritischen Kategorie oder zur unkritischen Kategorie, gegebenenfalls auch die nicht erfolgte Zuordnung kann zum Beispiel mit den das betreffende Bild beschreibenden Bilddaten verknüpft werden oder Identifikationsdaten der betreffenden Bilder können Datensätzen zur Kennzeichnung der kritischen Kategorie, der unkritischen Kategorie und gegebenenfalls einer nicht erfolgten Kennzeichnung zugeordnet werden.

In einem vierten Schritt 4 erfolgt eine Abfrage, ob ein Hindernis auf dem Gleisabschnitt STA erkannt wurde (kurz: OBS). Ist dies nicht der Fall, erfolgt eine Rekursion und es wird der Schritt 2 wiederholt. Ist dies jedoch der Fall, geht es weiter mit Schritt 5.

In einem fünften Schritt 5 erfolgt eine weitere Abfrage, ob das erkannte Hindernis eine Kritischen Kategorie KK mit Kollisionsgefahr zugeordnet werden konnte wurde oder keine Kategorie NK zugeordnet werden konnte, sodass eine Kollisionsgefahr nicht ausgeschlossen werden kann (kurz: KK-NK?). Ist dies der Fall, geht es weiter mit Schritt 6, ist dies jedoch nicht der Fall, geht es weiter mit Schritt 7 wobei in diesem Fall eine Testprozedur für die bildgebenden Sensoren gestartet werden kann (hierzu im Folgenden noch mehr).

In einem sechsten Schritt 6 erfolgt die Erzeugung eines ersten Signals zur Warnung vor Hindernissen und die Ausgabe desselben bzw. dessen Weiterverarbeitung in einem rechnergestützten Prozess (kurz: WRN1). Dabei führt das Signal zu einer Unterbrechung des Zugverkehrs, weil eine unmittelbare Kollisionsgefahr besteht. Beispielsweise könnte das Warnsignal zusätzlich für einen Zugführer eines einfahrenden Zuges im Fahrstand ausgegeben werden, damit dieser in Bremsbereitschaft geht.

In einem siebenten Schritt 7 erfolgt eine weitere Abfrage, ob es sich bei dem erkannten Hindernis um einen Zug handelt (kurz: TRN?). Ein Zug ist gewöhnlich nicht als Hindernis der kritischen Kategorie zu interpretieren, weil es zum normalen Bahnbetrieb gehört, dass Züge beispielsweise an einem Bahnsteig BS vorfahren oder einen Bahnübergang BU befahren und die Sicherungstechnik des Bahnbetriebs Kollisionen mit hoher Zuverlässigkeit verhindert. Die Erkennung erfolgt also nur zu Testzwecken, um eine Ausfalloffenbarung für die Sensoren zu verbessern. In diesem Fall geht es weiter mit Schritt 11.

In einem elften Schritt 11 erfolgt die Abarbeitung einer zweiten Testroutine (kurz: TST2). Diese Testroutine dient einer Ausfalloffenbarung für die ersten Sensoren SN11, SN12, SN13, SN14 und zweiten Sensoren S2 und erhöht somit vorteilhaft das Sicherheitsniveau beim Ablauf des Verfahrens. Fehler im Ablauf des Verfahrens, insbesondere wegen defekter Sensoren, können auf diese Weise früh erkannt werden und beispielsweise zur Einleitung von Wartungsmaßnahmen gemäß Schritt 12 führen kann (kurz: MSR).

Um sicherzugehen, dass der Zug planmäßig am Bahnsteig BS vorfahren darf, kann ein in Figur 5 nicht dargestellter Abgleich mit einem Fahrplan, insbesondere einem aktuellen Ist-Fahrplan zum Beispiel in der Leitzentrale LZ über die erste Schnittstelle S1 erfolgen. Wenn der Zug nicht planmäßig am Bahnsteig BS zu erwarten ist, kann ein Hindernissignal erzeugt werden, weil der unplanmäßige Zug für einen planmäßigen Zug ein Hindernis darstellen könnte.

Wenn kein Zug erkannt werden konnte, bedeutet dies, dass es sich um ein anderes Hindernis der unkritischen Kategorie handelt. Es besteht allerdings keine akute Kollisionsgefahr mit dem Hindernis, insbesondere auch, wenn es sich bei dem Hindernis eine Teststruktur handelt. In diesem Fall geht es weiter mit einer ersten Testroutine (kurz: TST1) gemäß Schritt 8. Diese Testroutine dient einer Ausfalloffenbarung für die ersten Sensoren SN11, SN12, SN13, SN14 SN11, SN12, SN13, SN14 und der zweiten Sensoren und erhöht somit vorteilhaft das Sicherheitsniveau beim Ablauf des Verfahrens. In einem neunten Schritt 9 erfolgt bei Feststellung eines Ausfalls die Erzeugung eines zweiten Signals als Warnung, welches ausgegeben oder rechnerisch gestützt verarbeitet werden kann. (kurz: WRN2).

In einem zehnten Schritt 10 erfolgt die Durchführung einer Sicherheitsmaßnahme (kurz: MSR). Eine geeignete Maßnahme muss abgeleitet werden, beispielsweise die manuelle Überwachung des Gleisabschnitt STA durch Mitarbeitende der Bahn. Dennoch kann eine Rekursion zum Schritt 2 erfolgen, falls der Fehler nur temporär aufgetreten ist und nachfolgende Rekursionsschleifen wieder eine einwandfreie Funktion der automatischen Überwachung auf Hindernisse hervorbringt.

### Bezugszeichenliste

- AT: Antennen
- B1: erstes Bild
- B12: zweites Bild
- BL: Balise
- BS: Bahnsteig
- BU: Bahnübergang
- CP1: erster Computer
- CP2: zweiter Computer
- CP3: dritter Computer
- FR: Fahrtrichtung
- FZ: Fahrzeug
- GL: Gleis
- HD1: lebendiges Hindernis
- HD2: unbelebtes Hindernis
- LZ: Leitzentrale
- PR1: erster Prozessor
- PR2: zweiter Prozessor
- PR3: dritter Prozessor
- PR5: fünfter Prozessor
- PR6: sechster Prozessor
- PR7: siebenter Prozessor
- PR8: achter Prozessor
- PR9: neunter Prozessor
- RU: Rechenumgebung
- S1: erste Schnittstelle
- S11: elfte Schnittstelle
- S12: zwölfte Schnittstelle
- S13: 13. Schnittstelle
- S15: 15. Schnittstelle
- S16: 16. Schnittstelle
- S17: 17. Schnittstelle
- S18: 18. Schnittstelle
- S19: 19. Schnittstelle
- S2: zweite Schnittstelle
- S3: dritte Schnittstelle
- S4: vierte Schnittstelle
- S5: fünfte Schnittstelle
- S6: sechste Schnittstelle
- S7: siebente Schnittstelle
- S8: achte Schnittstelle
- SE1: erste Speichereinheit
- SE2: zweite Speichereinheit
- SE3: dritte Speichereinheit
- SE5: fünfte Speichereinheit
- SE6: sechste Speichereinheit
- SE7: siebente Speichereinheit
- SE8: achte Speichereinheit
- SE9: neunte Speichereinheit
- SN11, SN12, SN13, SN14: erster Sensor
- SN2: zweiter Sensor
- STA: Gleisabschnitt
- TS1: erste Teststruktur
- TS2: zweite Teststruktur

## Patentansprüche

1. Verfahren zum Überwachen eines Gleisabschnitts (STA) auf Hindernisse, bei dem zum Überwachen der Gleisabschnitt (STA) von mindestens einem ersten bildgebenden Sensor und mindestens einem zweiten bildgebenden Sensor erfasst wird, **dadurch gekennzeichnet, dass**
a)
der mindestens eine erste Sensor (SN11, SN12, SN13, SN14) und der mindestens eine zweite Sensor (SN2) derart auf den Gleisabschnitt (STA) ausgerichtet sind, dass jeder Ort des Gleisabschnitts (STA) in je einem ersten Bild (B1) des mindestens einen ersten Sensors (SN11, SN12, SN13, SN14) und je einem zweiten Bild (B12) des mindestens einen zweiten Sensors (SN2) vorhanden ist,
b)
die ersten Bilder (B1) und zweiten Bilder (B12) rechnergestützt auf Hindernisse im Gleisabschnitt (STA) hin analysiert werden,
c)
ein auf das Vorhandensein eines Hindernisses hinweisendes Signal immer erzeugt wird, wenn ein Hindernis durch das Analysieren sowohl in dem mindestens einen der ersten Bilder (B1) als auch in dem mindestens einem der zweiten Bilder (B12) erkannt wurde,
d)
ein auf das Vorhandensein eines Hindernisses hinweisendes Signal, wenn das Hindernis durch das Analysieren nur in dem mindestens einem der ersten Bilder (B1) oder nur in dem mindestens einem der zweiten Bilder (B12) erkannt wurde, nur dann erzeugt wird, wenn das erkannte Hindernis durch das Analysieren als Hindernis einer vorgegebenen kritischen Kategorie erkannt wurde, und nicht erzeugt wird, wenn das erkannte Hindernis durch das Analysieren als Hindernis einer vorgegebenen unkritischen Kategorie erkannt wurde,
e)
ein auf einen Fehler hinweisendes erstes Signal immer erzeugt wird, wenn das Hindernis durch das Analysieren nur in dem mindestens einem der ersten Bilder (B1) oder nur in dem mindestens einem der zweiten Bilder (B12) erkannt wurde.

2. Verfahren nach Anspruch 1, **dadurch gekennzeichnet, dass** im Schritt c) gemäß Anspruch 1 ein auf das Vorhandensein eines Hindernisses hinweisendes Signal, wenn das Hindernis durch das Analysieren nur in dem mindestens einem der ersten Bilder (B1) oder nur in dem mindestens einem der zweiten Bilder (B12) erkannt wurde, auch dann erzeugt wird, wenn das erkannte Hindernis durch das Analysieren weder als Hindernis einer vorgegebenen kritischen Kategorie noch als Hindernis einer vorgegebenen unkritischen Kategorie erkannt wurde.

3. Verfahren nach Anspruch 1, **dadurch gekennzeichnet, dass** jeder der zweiten Sensoren einer zweiten Gruppe von mit Abstand zueinander am Gleisabschnitt (STA) angeordneten zweiten Sensoren angehört, wobei die erzeugten Bilder der zweiten Gruppe jeweils in einem Grenzbereich jeweils mit benachbarten Bildern aneinandergrenzen.

4. Verfahren nach Anspruch 1 oder 2, **dadurch gekennzeichnet, dass** die Funktion des Überwachens des Gleisabschnitts (STA) durch den mindestens einen ersten Sensor (SN11, SN12, SN13, SN14) überprüft wird, indem
f)
als Hindernis eine erste Teststruktur (TS1) im Gleisabschnitt (STA) angeordnet wird, deren Überfahren durch das Fahrzeug (FZ) ohne Kollision möglich ist und deren Position im Gleisabschnitt (STA) dem Verfahren als Positionsdatensatz verfügbar sind,
g)
die ersten Bilder (B1) rechnergestützt auf Hindernisse im Gleisabschnitt (STA) hin analysiert werden,
h)
ein auf einen Fehler hinweisendes zweites Signal ausgegeben wird, wenn auf der durch den Positionsdatensatz gekennzeichneten Position durch das Analysieren kein Hindernis erkannt wird.

5. Verfahren nach einem der voranstehenden Ansprüche, **dadurch gekennzeichnet, dass** die Funktion des Überwachens des Gleisabschnitts (STA) durch den mindesten einen ersten Sensor (SN11, SN12, SN13, SN14) und den mindestens einen zweiten Sensor (SN2) überprüft wird, wenn sich auf dem Gleisabschnitt (STA) ein Fahrzeug (FZ) befindet, indem
i)
die aktuelle Position des Fahrzeugs (FZ) in einem Positionsdatensatz verfügbar gemacht wird,
j)
die ersten Bilder (B1) und die zweiten Bilder (B12) rechnergestützt auf Hindernisse im Gleisabschnitt (STA) hin analysiert werden,
k)
ein auf einen Fehler hinweisendes drittes Signal ausgegeben wird, wenn auf der durch den Positionsdatensatz gekennzeichneten aktuellen Position durch das Analysieren in den ersten Bildern (B1) und/oder in den zweiten Bildern (B12) kein Hindernis erkannt wird.

6. Verfahren nach einem der Ansprüche 4 bis 5, **dadurch gekennzeichnet, dass** eine manuelle Überwachung des Gleisabschnittes (STA) auf Hindernisse durch Bahnpersonal angefordert wird, sobald das zweite Signal oder das dritte Signal ausgewertet wurde.

7. Bahnanlage mit einem Gleisabschnitt (STA), wobei in der Bahnanlage eine Vielzahl von bildgebenden Sensoren zur Überwachung des Gleisabschnitts (STA) installiert sind,
**dadurch gekennzeichnet, dass**
die Bahnanlage eine Rechenumgebung (RU) aufweist, die eingerichtet ist, ein Verfahren nach einem der vorstehenden Ansprüche durchzuführen.

8. Computerprogrammprodukt, enthaltend Programmbefehle, die durch eine Rechenumgebung (RU) ausführbar sind, derart, zumindest die Schritte b), c), d) und e) des Verfahrens nach einem der Ansprüche 1 - 6 ausgeführt wird.

9. Computerlesbares Speichermedium, enthaltend Daten, welche als Datensätze vom Speichermedium gespeichert werden, derart, dass die Datensätze das Computerprogrammprodukt nach dem letzten voranstehenden Anspruch ausführbar machen.
